# EUROPEAN PATENT APPLICATION

(11) **EP 4 683 083 A1**
(43) Date of publication of application: **21.01.2026**
(21) Application number: 25188980.4
(22) Date of filing: 11.07.2025
(51) Int. Cl.: H01M 50/367, H01M 50/213

(54) **BATTERY PACK**

(30) Priority: 18.07.2024 CN 202421709543 U
(71) Applicant: AESC Japan Ltd., Yokohama-Shi, Kanagawa 220-0012 (JP)
(72) Inventor: YANG, Xinwei, Pudong New Area Shanghai, 201315 (CN); WU, Changjun, Pudong New Area Shanghai, 201315 (CN); CUI, Xin, Pudong New Area Shanghai, 201315 (CN)
(74) Representative: Becker, Eberhard

(57) **Abstract**

Disclosed is a battery pack, including: a casing (100), the casing (100) having an exhaust channel (400); multiple cells (210), the multiple cells (210) being all disposed in the casing (100), and the gas discharged from the cell being adaptable to be discharged out of the casing (100) through the exhaust channel (400); an intercepting structure (300), disposed in the exhaust channel (400), the intercepting structure (300) having an intercepting surface (310), the intercepting surface (310) being configured to intercept particles mixed in the gas discharged from the cell.

## Description

### BACKGROUND

### Technical Field

The present disclosure relates to power battery, particularly to a battery pack.

### Description of Related Art

In the related art, existing battery packs include existing casings and multiple cells disposed within the existing casings, with each cell having a cell explosion-proof valve. When a cell experiences thermal runaway, the cell explosion-proof valve expels thermal runaway gases. However, the thermal runaway gases expelled from the cell explosion-proof valve also carry solid particles from within the cell. These particles, flowing with the thermal runaway gases inside the existing casing, are likely to adversely affect other components disposed within the existing casing and are likely to obstruct the casing explosion-proof valve.

Therefore, how to reduce the adverse effects caused by particles sprayed from the cell explosion-proof valve on the battery pack has become an urgent problem to be solved.

### SUMMARY

In view of the foregoing, the purpose of the present disclosure is to provide a battery pack.

Based on the above purpose, the present disclosure provides a battery pack, including: a casing, the casing has an exhaust channel; multiple cells, the multiple cells are all disposed in the casing, and the gas discharged from the cell is adaptable to be discharged out of the casing through the exhaust channel; an intercepting structure, disposed in the exhaust channel, the intercepting structure has an intercepting surface, the intercepting surface is configured to intercept the particles mixed in the gas discharged from the cell.

Optionally, the casing has a casing explosion-proof valve. Each of the cells has a cell explosion-proof valve. The gas is adaptable to flow out of the cell explosion-proof valve, and after flowing through the exhaust channel, discharge from the casing through the casing explosion-proof valve. The flow path of the gas from the cell explosion-proof valve towards the casing explosion-proof valve is defined as a first flow path. Along the first flow path, the sidewall surface of the intercepting structure facing the upstream of the gas is constructed as the intercepting surface.

Optionally, the surface where the cell explosion-proof valve is located is defined as a first cell end surface. The orthogonal projection of the intercepting surface corresponding to the cell explosion-proof valve on the first cell end surface is defined as an intercepting surface projection. Along the first flow path, at least part of the cell explosion-proof valve is located upstream of the intercepting surface projection.

Optionally, along the first flow path, the cell explosion-proof valve does not overlap with the intercepting surface projection.

Optionally, the intercepting surface is a plane or a concave curved surface.

Optionally, the surface where the cell explosion-proof valve is located is defined as a first cell end surface. When the intercepting surface is a concave curved surface, the intercepting surface bends with the straight line in the first direction as the axis. The first direction is the height direction of the cell; and/or, the intercepting surface bends with the straight line in the second direction as the axis, the second direction intersects with the first direction.

Optionally, the cell explosion-proof valve faces the inner bottom surface of the casing. The inner bottom surface of the casing is spaced apart from the cell explosion-proof valve to define the exhaust channel between the cell explosion-proof valve and the inner bottom surface of the casing. The intercepting structure is connected to the inner bottom surface of the casing.

Optionally, the intercepting surface is inclined towards the upstream of the gas.

Optionally, the surface where the cell explosion-proof valve is located is defined as a first cell end surface. The battery pack further includes a support structure for supporting and placing the cell. The support structure is at least partially disposed between the first cell end surface and the inner bottom surface of the casing. The support structure is provided with exhaust vents in one-to-one corresponding relationship with the cell explosion-proof valves. The exhaust vents pass through the support structure, so that the gas discharged from the cell explosion-proof valves may enter the exhaust channel through the exhaust vent. Along the direction perpendicular to the inner bottom surface of the casing, the top of the intercepting structure is spaced apart from the support structure.

Optionally, there are multiple intercepting structures. Each intercepting structure at least corresponds to one cell explosion-proof valve. Adjacent intercepting structures are disposed at intervals.

As can be seen from the above, by setting an intercepting structure in the exhaust channel of the casing, the battery pack provided by the present disclosure may intercept the particles in the gas sprayed from the cell when the cell experiences thermal runaway, thereby preventing the particles from continuing to flow with the gas in the casing, preventing the particles from causing adverse effects on the devices in the battery pack and blocking the casing explosion-proof valve, which helps prevent the problems of gas deflagration and thermal diffusion in the battery pack.

### BRIEF DESCRIPTION OF THE DRAWINGS

In order to explain the technical solutions in the present disclosure or related technologies more clearly, the drawings required in the description of the embodiments or related technologies will be briefly introduced below. Clearly, the drawings described below are merely embodiments of the present disclosure. For ordinary technicians in the field, other drawings may also be obtained based on these drawings without creative effort.
FIG. 1 is a schematic view of a partial structure of a battery pack according to an embodiment of the present disclosure.
FIG. 2 is a top view of a partial structure of a battery pack according to an embodiment of the present disclosure.
FIG. 3 is a sectional view taken along line A-A in FIG. 2.
FIG. 4 is a bottom view of a first cell end surface of a cell of a battery pack according to an embodiment of the present disclosure.
FIG. 5 is a sectional view taken along line B-B in FIG. 2.
FIG. 6 is a sectional view of a second structure taken along line A-A in FIG. 2.
FIG. 7 is a sectional view of a second structure taken along line B-B in FIG. 2.
FIG. 8 is a top view of a casing of a second structure of a battery pack according to an embodiment of the present disclosure.
FIG. 9 is a three-dimensional view of a casing of a second structure of a battery pack according to an embodiment of the present disclosure.
FIG. 10 is a three-dimensional view of a casing of a first structure of a battery pack according to an embodiment of the present disclosure.
FIG. 11 is a top view of a casing of a first structure of a battery pack according to an embodiment of the present disclosure.
FIG. 12 is a sectional view taken along line C-C in FIG. 11.

### DESCRIPTION OF THE EMBODIMENTS

In order to make the purpose, technical solution, and advantages of the present disclosure clearer and more comprehensible, the present disclosure will be further explained below in detail in conjunction with specific examples and with reference to the accompanying drawings.

It should be noted that: unless otherwise specifically stated, the relative arrangement of components, numerical expressions, and values described in these examples do not limit the scope of the present disclosure.

In the meantime, it should be understood that, for ease of description, the dimensions of the various parts shown in the drawings are not drawn according to actual proportional relationships.

The following description of at least one exemplary example is actually only illustrative and is by no means a limitation on the present disclosure and its applications or uses.

It should be noted that, unless otherwise defined, the technical terms or scientific terms used in the examples of the present disclosure should be understood in the general sense by persons with ordinary skill in the field to which the present disclosure pertains. The words "first", "second" and similar words used in the examples of the present disclosure do not indicate any sequence, quantity or importance, but are only used to distinguish different components. Words such as "include" or "contain" mean that the elements or objects appearing before the word encompass the elements or objects listed after the word and their equivalents, without excluding other elements or objects. Words such as "connect" or "connected" are not limited to physical or mechanical connections, but may include electrical connections, whether direct or indirect. "Up", "down", "left", "right", and so on are only used to indicate relative position relationships, and when the absolute position of the described object changes, the relative position relationship may also change accordingly.

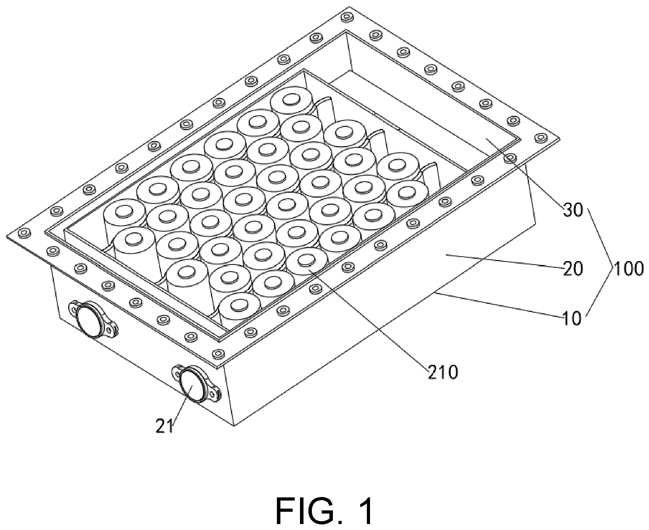

As shown in FIG. 1, FIG. 1 is a three-dimensional view of a partial structure of a battery pack. The battery pack may include a casing 100. The casing 100 may include a base plate 10 and four side panels 20 connected to the edge of the base plate 10. The base plate 10 and the four side panels 20 together define an accommodation space 30 located inside the casing 100. The battery pack also includes multiple cells 210 disposed in the accommodation space 30. The cells 210 may be columnar cells.

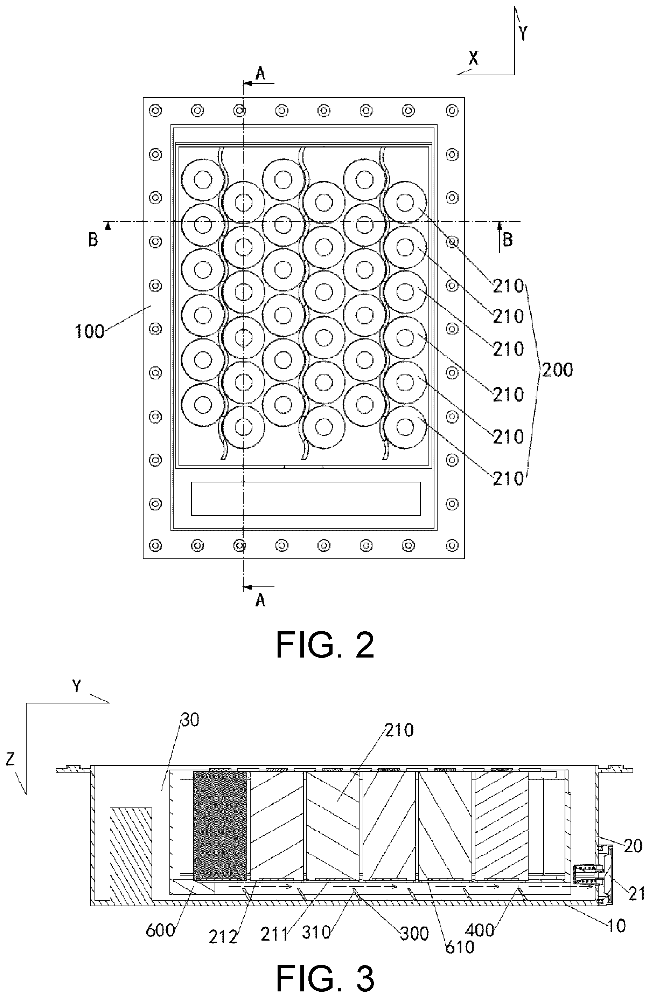

As shown in FIG. 2, FIG. 2 is a top view of a partial structure of a battery pack. Taking the structure shown in FIG. 2 as an example, multiple cells 210 may form multiple cell arrays 200. The multiple cell arrays 200 are distributed along the width direction (such as the X direction in FIG. 2) of the casing 100. Each cell array 200 includes multiple cells 210 distributed along the length direction (such as the Y direction in FIG. 2) of the casing 100. In order to improve the space utilization of the accommodation space 30, adjacent cell arrays 200 may be arranged in a staggered manner.

As shown in FIG. 1, the side panel 20 of the casing 100 is equipped with a casing explosion-proof valve 21. As shown in FIG. 3, FIG. 3 is a sectional view taken along line A-A in FIG. 2. When the cell 210 is a columnar cell 210, its cell explosion-proof valve 211 may be located at the bottom of the cell 210, and close to the base plate 10 of the casing 100. When the cell 210 experiences thermal runaway, the casing explosion-proof valve 21 will open, and the thermal runaway gas sprayed from the cell explosion-proof valve 211 carrying particles will flow towards the direction of the casing explosion-proof valve 21. When the thermal runaway gas flows to the casing explosion-proof valve 21, part of the gas will be discharged out of the casing 100 through the casing explosion-proof valve 21. However, at least some of the particles cannot pass through the casing explosion-proof valve 21, and these particles will block the casing explosion-proof valve 21, making it difficult for gas that arrives subsequently to be discharged out of the casing 100 through the casing explosion-proof valve 21, which may cause gas deflagration problems and thermal diffusion (TP) problems inside the battery pack.

In view of foregoing, as shown in FIG. 3, an embodiment of the present disclosure provides a battery pack, including: a casing 100, the casing 100 has an exhaust channel 400 therein; multiple cells 210, all of the multiple cells 210 are disposed in the casing 100, and the gas discharged from the cells 210 is adaptable to be discharged out of the casing 100 through the exhaust channel 400; an intercepting structure 300, disposed in the exhaust channel 400, the intercepting structure 300 has an intercepting surface 310, and the intercepting surface 310 is configured to intercept the particles mixed in the gas discharged from the cells 210.

Exemplarily, the exhaust channel 400 may be formed by the structure of the casing 100 itself, or may be defined by a combination of the casing 100 and a structural member disposed inside the casing 100.

Exemplarily, the intercepting structure 300 may be connected to the cell 210 or connected to the casing 100 of the battery pack, so that the position of the intercepting structure 300 is fixed in the battery pack.

Exemplarily, the starting point of the exhaust channel 400 may be the cell explosion-proof valve 211 of the cell 210, and the end point may be the casing explosion-proof valve 21.

Exemplarily, the intercepting structure 300 may be a block structure, a tubular structure, a plate structure, or a columnar structure.

Exemplarily, the intercepting surface 310 may be any surface of the intercepting structure 300. For example, when the intercepting structure 300 is a block structure, the intercepting surface 310 may be a sidewall surface or a top surface. When the intercepting structure 300 is a tubular structure, the intercepting surface 310 may be an outer peripheral surface, or an inner peripheral surface, or an end surface.

Exemplarily, the intercepting surface 310 may be a smooth surface, a surface with microstructures (such as recesses or protrusions), or a surface connected with a medium layer (such as an adhesive layer, a mesh layer, or a flocked layer).

When the cell 210 experiences thermal runaway, the gas sprayed from the cell 210 carries particles and flows along the exhaust channel 400 towards the outside of the casing 100. When passing through the intercepting structure 300 disposed in the exhaust channel 400, the intercepting surface 310 of the intercepting structure 300 will intercept the particles in the gas, blocking the particles from continuing to flow with the gas, so that at least part of the particles adheres to or accumulates at the intercepting surface 310; while the gas may pass through or bypass the intercepting structure 300 to continue flowing, and finally be discharged out of the casing 100.

By setting the intercepting structure 300 in the exhaust channel 400 of the casing 100, the battery pack provided by the embodiment of the present disclosure may intercept the particles in the gas sprayed from the cell 210 when the cell 210 experiences thermal runaway. In this way, it is possible to avoid the particles continuing to flow with the gas in the casing 100, thus preventing the particles from causing adverse effects on the devices in the battery pack and blocking the casing explosion-proof valve 21, which helps prevent the problems of gas deflagration and thermal diffusion in the battery pack.

As shown in FIG. 3, in some embodiments, the casing 100 has a casing explosion-proof valve 21. Each of the cells 210 has a cell explosion-proof valve 211. The gas is adaptable to flow out from the cell explosion-proof valve 211, and after flowing through the exhaust channel 400, discharge from the casing 100 through the casing explosion-proof valve 21. The flow path of the gas from the cell explosion-proof valve 211 towards the casing explosion-proof valve 21 is defined as the first flow path (the gas flow direction is as indicated by the dash-lined arrow in FIG. 3). Along the first flow path, the sidewall surface of the intercepting structure 300 facing the upstream of the gas is constructed as the intercepting surface 310.

Exemplarily, the surface area of the intercepting surface 310 is not less than the surface area of other sidewalls of the intercepting structure 300. For example, when the intercepting structure 300 is a plate structure, the plate surface of the plate structure may be used as the intercepting surface 310.

The gas flows from the cell explosion-proof valve 211 towards the casing explosion-proof valve 21. One side of the intercepting structure 300 close to the cell explosion-proof valve 211 is the upstream of the gas, and one side of the intercepting structure 300 close to the casing explosion-proof valve 21 is the downstream of the gas. When the gas reaches the intercepting structure 300, the gas will first contact the intercepting surface 310 facing the upstream. Under the blocking effect of the intercepting surface 310, the flow velocity of the gas will decrease, so the particles carried by the gas will settle at the intercepting surface 310, thereby achieving the purpose of intercepting the particles in the gas discharged from the cell explosion-proof valve 211.

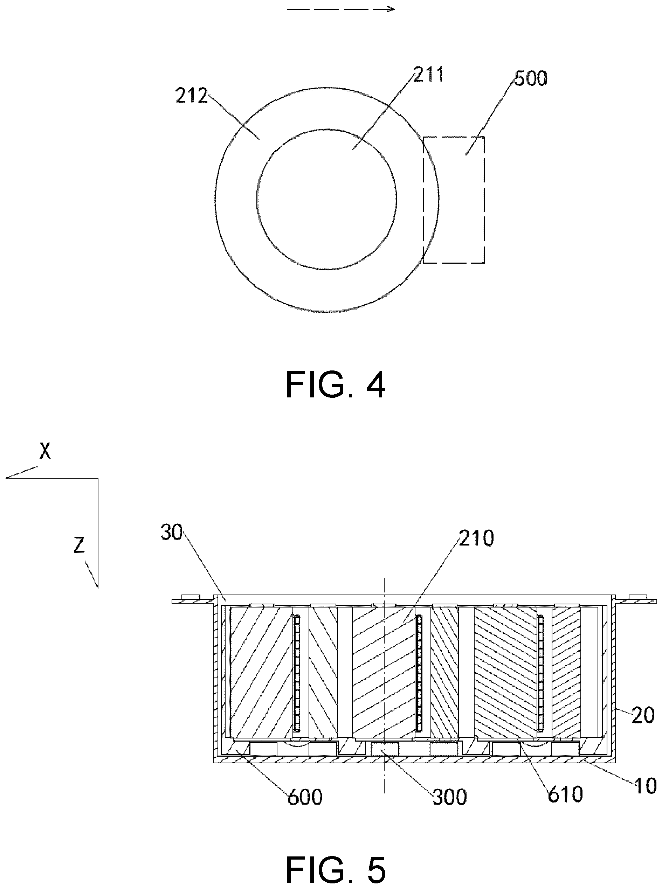

As shown in FIG. 3, in some embodiments, the surface where the cell explosion-proof valve 211 is located is defined as the first cell end surface 212. The orthogonal projection of the intercepting surface 310 corresponding to the cell explosion-proof valve 211 on the first cell end surface 212 is defined as the intercepting surface projection 500. As shown in FIG. 4, FIG. 4 is a bottom view of a first cell end surface 212. Along the first flow path (the gas flow direction is as indicated by the dashed-line arrow in FIG. 4), at least part of the cell explosion-proof valve 211 is located upstream of the intercepting surface projection 500.

In combination with the above embodiments, the cell explosion-proof valve 211 is the starting point of the first flow path, and the intercepting surface 310 may block the gas in the first flow path to intercept the particles in the gas. Therefore, it may be understood that along the first flow path, the intercepting surface 310 can only intercept the gas flowing from the upstream to the intercepting surface 310, so it is necessary to ensure that at least part of the cell explosion-proof valve 211 is located upstream of the intercepting surface 310. In other words, the intercepting surface 310 may produce an interception effect on the gas sprayed from a part of the cell explosion-proof valve 211 located upstream of the intercepting surface 310; while it is difficult to produce an interception effect on a part of the cell explosion-proof valve 211 located downstream of the intercepting surface 310.

As shown in FIG. 4, in some embodiments, along the first flow path, the cell explosion-proof valve 211 and the intercepting surface projection 500 do not overlap each other.

Exemplarily, the intercepting surface 310 is close to the cell explosion-proof valve 211 to intercept the particles carried in the gas near the starting position of the first flow path, thus reducing the impact of particles on other devices in the battery pack.

In order to improve the interception effect of the intercepting surface 310, the gas flow flowing through the intercepting surface 310 may be increased. To achieve this purpose, it is necessary to set the entire cell explosion-proof valve 211 corresponding to the intercepting surface 310 to be located upstream of the intercepting surface 310, so that all the gas sprayed from the cell explosion-proof valve 211 will pass through the intercepting surface 310 during the flow process along the first flow path, that is, the intercepting surface 310 intercepts all the gas sprayed from the cell explosion-proof valve 211, so that the intercepting surface 310 intercepts more particles carried in the gas.

As shown in FIG. 3, in some embodiments, the intercepting surface 310 is a plane.

Designing the intercepting surface 310 as a plane, while ensuring that the intercepting structure 300 has an interception effect on particles in the flowing gas, makes it possible to reduce the structural complexity of the intercepting structure 300, thus helping to reduce costs.

As shown in FIG. 5, FIG. 5 is a sectional view taken along line B-B in FIG. 2.

Exemplarily, the vertical centerline of the intercepting structure 300 (for example, the dash-dot line in FIG. 5) and the vertical centerline of the corresponding cell 210 are in the same vertical plane.

Exemplarily, the width of the intercepting surface 310 (the dimension of the intercepting structure 300 along the X direction in FIG. 5) may be slightly smaller than the diameter of the cell explosion-proof valve 211, or equal to the diameter of the cell explosion-proof valve 211, or greater than the diameter of the cell explosion-proof valve 211. The width of the intercepting surface 310 may be designed according to the specific structure of the cell 210 and/or the battery pack, which is not limited herein.

Exemplarily, the sidewall of the intercepting structure 300 may be a vertical sidewall along the width direction.

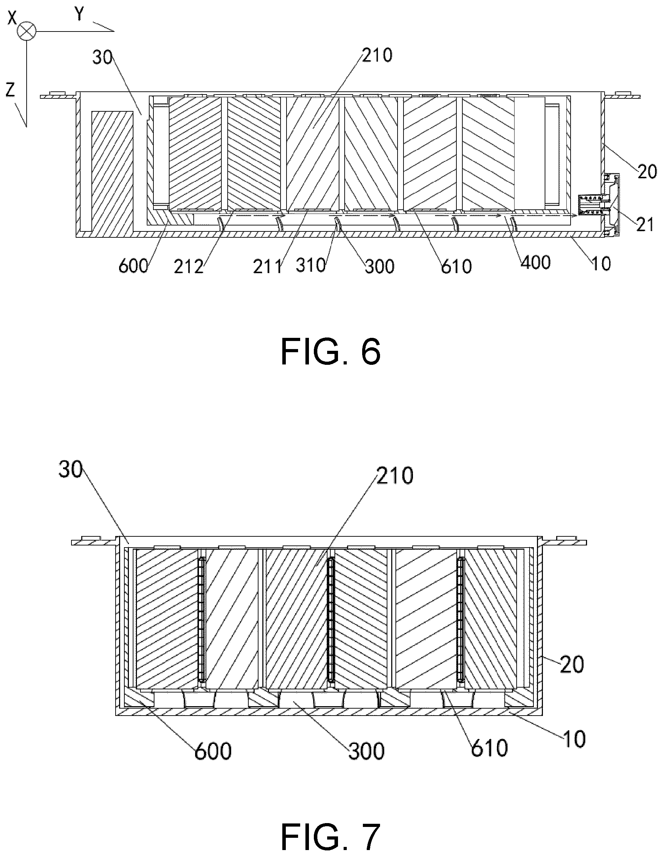

As shown in FIG. 6, FIG. 6 is a sectional view of a second structure of a battery pack taken along line A-A in FIG. 2. In some embodiments, the intercepting surface 310 is a concave curved surface.

Designing the intercepting surface 310 as a curved surface that is concave towards the interior of the intercepting structure 300, on one hand, may increase the surface area of the intercepting surface 310 to improve the interception effect of the intercepting surface 310 on particles in the gas; on the other hand, the inwardly concave curved surface may gather particles towards the middle part of the intercepting surface 310, preventing particles from moving along the surface of the intercepting surface 310 towards the edge, thereby helping to avoid particles from falling off the intercepting surface 310.

As shown in FIG. 7, FIG. 7 is a sectional view of a second structure of a battery pack taken along line B-B in FIG. 2.

Exemplarily, the sidewall of the intercepting structure 300 may be a bent sidewall along the width direction.

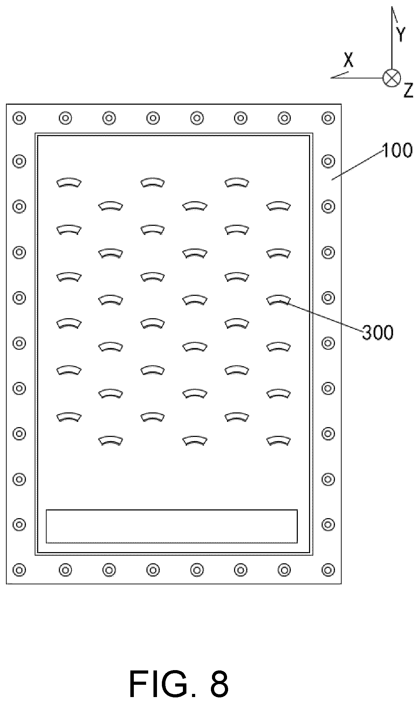

The intercepting surface 310 may bend only along a single direction, as shown in FIG. 8. FIG. 8 is a top view of a casing 100 of a second structure. In some embodiments, the intercepting surface 310 of the intercepting structure 300 bends with the straight line in the first direction (such as the Z direction in FIG. 8) as the axis, where the first direction is the height direction of the cell 210. Exemplarily, the intercepting surface 310 bends from both ends towards the middle. In this embodiment, the intercepting surface 310 bends transversely, which may effectively increase the transverse surface area of the intercepting surface 310.

Alternatively, as shown in FIG. 6, in some embodiments, when the intercepting surface 310 is a concave curved surface, the intercepting surface 310 bends with the straight line in the second direction (such as the X direction in FIG. 6) as the axis, where the second direction intersects with the first direction.

Exemplarily, the second direction is perpendicular to the first direction.

In this embodiment, the intercepting surface 310 bends longitudinally, which may effectively increase the longitudinal surface area of the intercepting surface 310.

Of course, the intercepting surface 310 may bend both longitudinally and transversely, that is, the intercepting surface 310 may be a concave spherical curved surface. In this way, the surface area of the intercepting surface 310 may be further increased, which helps to further improve the interception effect on particles in the gas.

As shown in FIG. 6, in some embodiments, the cell explosion-proof valve 211 faces the inner bottom surface of the casing 100. The inner bottom surface of the casing 100 is spaced apart from the cell explosion-proof valve 211, so as to define an exhaust channel 400 between the cell explosion-proof valve 211 and the inner bottom surface of the casing 100, and the intercepting structure 300 is connected to the inner bottom surface of the casing 100.

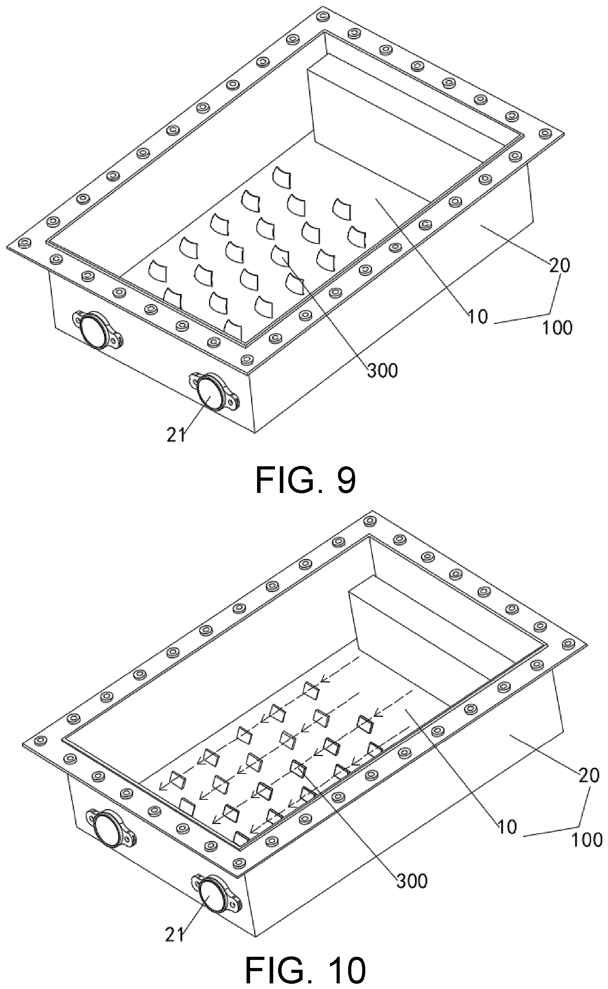

As shown in FIG. 9, FIG. 9 is a three-dimensional view of a casing 100 of a second structure. The intercepting structure 300 is connected to the inner bottom surface of the casing 100.

Exemplarily, the intercepting structure 300 may be connected to the inner bottom surface of the casing 100 by means of adhesion, welding, plugging, engagement, fastener connection or integrated molding connection.

In normal circumstances, for gas flowing in the exhaust channel 400, the particles carried by the gas are located in the lower layer of the gas due to gravity, that is, near the inner bottom surface of the casing 100. In this embodiment, the intercepting structure 300 is connected to the inner bottom surface of the casing 100. On one hand, the intercepting structure 300 is located in the gas layer where the concentration of particles in the gas is higher, which helps to improve the interception effect on particles in the gas; on the other hand, the intercepting structure 300 is connected to the inner bottom surface of the casing 100, which may eliminate the gap between the intercepting structure 300 and the inner bottom surface of the casing 100, helping to keep the particles deposited on the inner bottom surface of the casing 100 at the position where the intercepting surface 310 is located, avoiding further movement of the deposited particles under the action of gas that arrives subsequently.

As shown in FIG. 10, FIG. 10 is a three-dimensional view of a casing 100 of a first structure. In some embodiments, the intercepting surface 310 is inclined towards the upstream of the gas.

Exemplarily, the inclination angle of the intercepting surface 310 (i.e., the angle between the intercepting surface 310 and the inner bottom surface of the casing 100) may be designed according to the specific structure of the cell 210 and/or the battery pack, which is not limited herein.

Taking the structure and direction shown in FIG. 3 as an example for explanation, along the first flow path, the gas flows from the upstream (i.e., the left side of the intercepting surface 310) to the downstream (i.e., the right side of the intercepting surface 310) through the intercepting surface 310. When the gas reaches the intercepting surface 310, since the intercepting surface 310 is inclined towards the upstream of the gas, after being intercepted by the intercepting surface 310, the particles in the gas will move towards the inner bottom surface of the casing 100 along the inclined intercepting surface 310, which helps to improve the sedimentation efficiency of the particles in the gas, and avoids further movement of the deposited particles under the action of gas that arrives subsequently.

As shown in FIG. 3, in some embodiments, the battery pack also includes a support structure 600 for supporting and placing the cell 210. The support structure 600 is at least partially disposed between the first cell end surface 212 and the inner bottom surface of the casing 100. The support structure 600 is provided with exhaust vents 610 in one-to-one corresponding relationship with the cell explosion-proof valves 211. The exhaust vents 610 pass through the support structure 600, so that the gas discharged from the cell explosion-proof valve 211 is able to enter the exhaust channel 400 through the exhaust vent 610. Along the direction (such as the Z direction in FIG. 3) perpendicular to the inner bottom surface of the casing 100, the top of the intercepting structure 300 is spaced apart from the support structure 600.

Exemplarily, the first cell end surface 212 of the cell 210 may be connected to the support structure 600 by means of adhesion.

Exemplarily, the surface of the support structure 600 away from the inner bottom surface of the casing 100 is provided with a groove for positioning the cell 210, and the exhaust vent 610 is disposed at the bottom of the groove.

Exemplarily, the support structure 600 may abut against the inner bottom surface of the casing 100, or abut against the protruding structure disposed on the inner sidewall of the casing 100, so that the position of the support structure 600 is fixed in the accommodation space 30.

The top of the intercepting structure 300 is spaced apart from the support structure 600, so it is possible to form a gap between them that allows gas to flow, thus helping the gas sprayed from the cell explosion-proof valve 211 to flow smoothly in the casing 100 and eventually discharge from the casing 100.

In the meantime, it should also be explained that, in combination with the aforementioned embodiments, for the gas flowing in the exhaust channel 400, the concentration of particles in the lower layer of the gas is high, and the concentration of particles in the upper layer is low. Based on FIG. 3, it can be seen that the above-mentioned gap corresponds to the upper layer of the gas, therefore, it will not cause a significant adverse effect on the interception of particles in the gas.

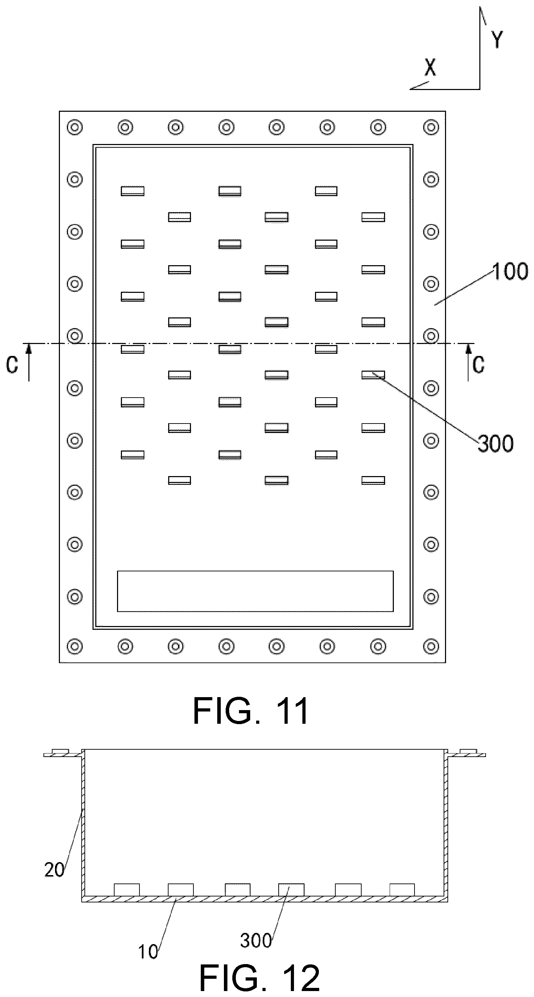

As shown in FIG. 11, FIG. 11 is a top view of a casing 100 of a first structure. In some embodiments, there are multiple intercepting structures 300. Each intercepting structure 300 at least corresponds to one cell explosion-proof valve 211.

Typically, as shown in FIG. 3, each cell 210 has one cell explosion-proof valve 211, that is, the number of intercepting structures 300 ≤ the number of cells 210.

It needs to be explained that, when one intercepting structure 300 corresponds to two cell explosion-proof valves 211, exemplarily, the two cell explosion-proof valves 211 may be located upstream of the intercepting structure 300 along the first flow path. In this way, the gas sprayed from both cell explosion-proof valves 211 will pass through the intercepting structure 300 during the process of flowing along the first flow path, allowing the particles in the gas sprayed from both cell explosion-proof valves 211 to be intercepted by the interception surface 310.

As shown in FIG. 11, adjacent intercepting structures 300 are disposed at intervals.

Adjacent intercepting structures 300 are disposed at intervals, so it is possible to form a gap between the two adjacent intercepting structures 300 for gas to flow, thus helping the gas sprayed from the cell explosion-proof valve 211 to flow smoothly in the casing 100 and eventually discharge from the casing 100.

It also needs to be explained that the vertical height of the intercepting structure 300 protruding from the inner bottom surface of the casing 100 may be designed according to the structure of the casing 100, which is not limited herein.

As shown in FIG. 6 and FIG. 12, FIG. 12 is a sectional view taken along line C-C in FIG. 11. Exemplarily, the vertical height of the intercepting structure 300 may be determined according to the configuration position of the casing explosion-proof valve 21 on the side panel 20. Typically, the vertical height of the intercepting structure 300 will not be higher than the center height of the casing explosion-proof valve 21, to prevent the intercepting structure 300 from causing significant obstruction to the exhaust of the casing 100.

It needs to be explained that some embodiments of the present disclosure have been described above. Other embodiments are within the range of the appended claims. In some cases, the actions or steps recited in the claims may be executed in a sequence different from the above embodiments and still achieve the desired results. Additionally, the processes depicted in the drawings do not necessarily require the specific sequence or consecutive sequence shown to achieve the desired results. In certain embodiments, multitasking and parallel processing may also be possible or potentially advantageous.

Each embodiment in the present disclosure is described in a progressive manner, with each embodiment focusing on explaining the differences from other embodiments, and the same or similar parts between various embodiments can be cross-referenced.

The description of the present disclosure is given for the purpose of example and description, and is not exhaustive or limiting the application to the disclosed forms. Many modifications and variations are obvious to ordinary technicians in the field. The selection and description of embodiments are to better explain the principles and practical applications of the present disclosure, and to enable ordinary technicians in the field to understand the present disclosure and design various embodiments with various modifications suitable for specific purposes.

Ordinary technicians in the field should understand: the discussion of any embodiment above is only exemplary and is not intended to imply that the range of the present disclosure (including claims) is limited to these examples. Based on the concept of the present disclosure, technical features between the above embodiments or different embodiments may also be combined, steps may be implemented in any sequence, and there are many other variations of different aspects of the embodiments of the present disclosure as described above, which are not provided in detail for the sake of brevity.

Although the present disclosure has been described in conjunction with specific embodiments of the present disclosure, based on the foregoing description, many substitutions, modifications, and variations of these embodiments will be obvious to ordinary technicians in the field.

## Claims

1. A battery pack, **characterized in that** the battery pack comprising:
a casing (100), wherein the casing (100) has an exhaust channel (400);
a plurality of cells (210), wherein the plurality of cells (210) are all disposed in the casing (100), and gas discharged from the cells (210) is adaptable to be discharged out of the casing (100) through the exhaust channel (400);
an intercepting structure (300), disposed in the exhaust channel (400), wherein the intercepting structure (300) has an intercepting surface (310), the intercepting surface (310) is configured to intercept particles mixed in the gas discharged from the cells (210).

2. The battery pack according to claim 1, wherein the casing (100) has a casing explosion-proof valve (21), each of the cells (210) has a cell explosion-proof valve (211), the gas is adaptable to flow out of the cell explosion-proof valve (211), and after flowing through the exhaust channel (400), discharge from the casing (100) through the casing explosion-proof valve (21), a flow path of the gas from the cell explosion-proof valve (211) towards the casing explosion-proof valve (21) is defined as a first flow path, along the first flow path, a sidewall surface of the intercepting structure (300) facing an upstream of the gas is constructed as the intercepting surface (310).

3. The battery pack according to claim 1 or 2, wherein a surface where the cell explosion-proof valve (211) is located is defined as a first cell end surface (212), an orthogonal projection of the intercepting surface (310) corresponding to the cell explosion-proof valve (211) on the first cell end surface (212) is defined as an intercepting surface projection (500);
along the first flow path, at least part of the cell explosion-proof valve (211) is located upstream of the intercepting surface projection (500).

4. The battery pack according to any one of claims 1 to 3, wherein along the first flow path, the cell explosion-proof valve (211) does not overlap with the intercepting surface projection (500).

5. The battery pack according to any one of claims 1 to 4, wherein the intercepting surface (310) is a plane or a concave curved surface.

6. The battery pack according to any one of claims 1 to 5, wherein a surface where the cell explosion-proof valve (211) is located is defined as a first cell end surface (212), when the intercepting surface (310) is the concave curved surface, the intercepting surface (310) bends with a straight line in a first direction as an axis, the first direction is a height direction of the cells (210); and/or,
the intercepting surface (310) bends with a straight line in a second direction as an axis, the second direction intersects with the first direction.

7. The battery pack according to any one of claims 1 to 6, wherein the cell explosion-proof valve (211) faces an inner bottom surface of the casing (100), the inner bottom surface of the casing (100) is spaced apart from the cell explosion-proof valve (211) to define the exhaust channel (400) between the cell explosion-proof valve (211) and the inner bottom surface of the casing (100), the intercepting structure (300) is connected to the inner bottom surface of the casing (100).

8. The battery pack according to any one of claims 1 to 7, wherein the intercepting surface (310) is inclined towards the upstream of the gas.

9. The battery pack according to any one of claims 1 to 8, wherein a surface where the cell explosion-proof valve (211) is located is defined as a first cell end surface (212);
the battery pack further comprises a support structure (600) configured to support and place the cells (210), the support structure (600) is at least partially disposed between the first cell end surface (212) and the inner bottom surface of the casing (100), the support structure (600) is provided with exhaust vents (610) in one-to-one corresponding relationship with the cell explosion-proof valves (211), the exhaust vents (610) pass through the support structure (600), so that the gas discharged from the cell explosion-proof valves (211) is able to enter the exhaust channel (400) through the exhaust vents (610);
along a direction perpendicular to the inner bottom surface of the casing (100), a top of the intercepting structure (300) is spaced apart from the support structure (600).

10. The battery pack according to any one of claims 1 to 9, wherein there are a plurality of the intercepting structures (300), each of the intercepting structures (300) at least corresponds to one of the cell explosion-proof valves (211), the adjacent intercepting structures (300) are disposed at intervals.
